# EUROPÄISCHE PATENTSCHRIFT

(11) **EP 1 987 271 B1**
(45) Veröffentlichungstag und Bekanntmachung des Hinweises auf die Patenterteilung: **24.02.2010**
(21) Anmeldenummer: 06828690.5
(22) Anmeldetag: 15.12.2006
(51) Int. Cl.: F16H 61/24, F16H 59/08, G05G 5/03, G05G 1/10, F16H 61/12

(54) **WÄHLEINRICHTUNG ZUM SCHALTEN EINES FAHRZEUGGETRIEBES**
SELECTOR FOR CONTROLLING A VEHICLE TRANSMISSION
SELECTEUR POUR LA COMMANDE D'UNE BOITE DE VITESSES D'UN VEHICULE

(30) Priorität: 20.12.2005 DE 102005061285
(43) Veröffentlichungstag der Anmeldung: 05.11.2008
(73) Patentinhaber: Lemförder-Electronic GmbH, 32339 Espelkamp (DE)
(72) Erfinder: FÜRHOFF, Achim, 32278 Kirchlengern (DE); SCHWARZ, Knut, 32361 Preussich Oldendorf (DE); DOMBROWSKI, Grigori, 32312 Lübbecke (DE); STRADAL, Torsten, 49401 Damme (DE)
(86) Internationale Anmeldenummer: PCT/DE2006/002259
(87) Internationale Veröffentlichungsnummer: WO 2007/076814

(56) Entgegenhaltungen:
- US-A1- 2002 128 753
- US-B1- 6 295 887
- US-B1- 6 480 752

## Beschreibung

Die Erfindung betrifft eine Wähleinrichtung zum Schalten eines Fahrzeuggetriebes, mit einem um eine Drehachse in unterschiedliche Schaltstellungen drehbarem Bedienelement, einer mit dem Bedienelement verbundenen und um die Drehachse drehbaren Welle, einer mit der Welle verbundenen Drehwinkelerfassungseinrichtung, mittels welcher eine Verdrehung des Bedienelements um die Drehachse erfassbar ist, einem Aktuator, mittels welche ein Drehmoment an die Welle abgebbar oder einer Drehung der Welle ein Drehmoment entgegensetzbar ist, und einer mit der Drehwinkelerfassungseinrichtung und dem Aktuator verbundenen Steuereinrichtung, mittels welcher das von dem Aktuator abgebbare oder entgegensetzbare Drehmoment steuerbar und das Fahrzeuggetriebe in den Schaltstellungen zugeordnete Schaltzustände schaltbar ist. Ferner betrifft die Erfindung die Verwendung einer solchen Wähleinrichtung zum Schalten eines Fahrzeuggetriebes.

Aus der US 6 295 887 B1 ist eine Wähleinrichtung zum Schalten eines Getriebes eines Kraftfahrzeugs bekannt, mit einem drehbar gelagerten Schaltelement, welches in unterschiedliche Schaltstellungen drehbar ist. Mit dem Bedienelement wirkt ein mit einer Steuerung verbundenes Potentiometer zusammen, so dass eine Anordnung geschaffen wird, mittels welcher das Fahrzeug elektronisch gesteuert schaltbar ist. Ferner weist die Vorrichtung eine mechanische Rastierung auf, die dem Anwender beim Umschalten zwischen den Schaltstellungen ein Schaltgefühl vermittelt. Zusätzlich ist eine mechanische Eingriffskontur vorgesehen, die ein Umschalten zwischen bestimmten Schaltstellungen blockieren oder freigeben kann.

Bei unterschiedlichen Fahrzelgmodellen kann eine unterschiedliche Anzahl von Schaltstellungen gewünscht sein, so dass auch unterschiedliche Rastierungen und Eingriffskonturen geschaffen werden müssen. Daher sind für unterschiedliche Fahrzeugmodelle auch unterschiedliche Wähleinrichtungen vorzuhalten, so dass die Variantenvielfalt dieser Wähleinrichtung eingeschränkt ist.

Die US 6 904 823 B2 offenbart eine haptische Wähleinrichtung für ein Fahrzeug, mit einem um zwei Drehachsen schwenkbar gelagerten Wählhebel und zwei Aktuatoren, die über Riementriebe mit dem Wählhebel gekoppelt sind und Kräfte auf diesen ausüben können. Ferner sind mit den Aktuatorwellen als optische Decoder ausgebildete Sensoren gekoppelt, mittels welchen die Verdrehungen der Wellen erfassbar sind. Ein Prozessor kann die von den Sensoren abgegebenen Signale lesen, den von dem Wählhebel ausgewählten Gang bestimmen und das Fahrzeug über ein Steuersystem in den Gang schalten. Ferner kann der Prozessor aus den Sensorsignalen Kräfte ermitteln und diese über Aktuatoren an den Wählhebel abgeben. Insbesondere ist es möglich, über die Kräfte eine Rastierung für den Wählhebel nachzuempfinden, wobei ein Kraftprofil in einem Speicher hinterlegt sein kann.

Aufgrund der aufwendigen Lagerung des Wählhebels und der beiden Riementriebe ist die Mechanik dieser Wähleinrichtung relativ teuer und baut ähnlich groß wie eine rein mechanische Wähleinrichtung, so dass der Wunsch nach einer mechanisch einfacher aufgebauten und weniger Raum einnehmenden Wähleinrichtung besteht.

Aus der gattungsfremden DE 200 14 425 U1 ist ein Abfühlmechanismus für einen Bedienknopfmechanismus bekannt, wobei ein Bedienknopf an eine Antriebswelle eines Aktuators gekoppelt ist, an deren Unterseite eine Kodiereinrichtungsscheibe montiert ist, und wobei die Bedienknopfposition während einer Arbeitsbewegung der Kodiereinrichtungsscheibe von einem Messfühler abgetastet wird. Ein Mikroprozessor kann die Sensorsignale lesen, entsprechende Kräfte aus diesen Signalen berechnen und entsprechende Steuersignale an den Aktuator ausgeben. Der Aktuator überträgt die Kräfte an den Bedienknopf.

Dieser Abfühlmechanismus ist gattungsfremd und nicht für das Schalten eines Fahrzeuggetriebes vorgesehen bzw. ausgelegt.

Die US 2002/0128753 A1, die alle Merkmale des Oberbegriffes des unabhängigen Anspruchs 1 offenbart, zeigt bereits eine Wähleinrichtung zum Schalten eines Fahrzeuggetriebes mit einem um eine Drehachse in unterschiedlichen Schaltstellungen drehbaren Bedienelement sowie einer mit dem Bedienelement verbundenen und um die Drehachse drehbaren Welle. Über ein Getriebe ist ein Aktuator mit der Welle verbunden, mittels welchem ein Drehmoment an die Welle abgebbar oder einer Drehung der Welle ein Drehmoment entgegensetzbar ist Der Aktuator sitzt dabei auf einer von der Welle des Bedienelements verschiedenen, hierzu parallel angeordneten Welle.

Ferner offenbart die US 6,480,752 B1 eine Bedieneinrichtung mit einem Drehknopf mit einer haptischen Rückmeldung. Hierzu ist ein auf einer Welle angeordneter Rotor vorgesehen, der von Spulen umgeben ist und mit den in den Spulen erzeugten Feldern zusammenwirkt und so eine Drehbewegung oder ein Drehmoment erzeugt. In achsaxialer Richtung beabstandet ist eine Leiterplatte angeordnet, auf welcher zwei Hallsensoren in gleichen radialen Abstand von der Drehachse des Rotors um 90° versetzt angeordnet sind. Die Hallsensoren sensieren über das im Rotor erzeugte Magnetfeld den Drehwinkel des Rotors bzw. des Drehknopfes.
Diese Anordnung benötigt eine relativ aufwendige Leiterplatte mit zwei Hallsensoren, die radial weit aufbaut. Zudem baut der Rotor in radialer Richtung groß auf.

Aufgabe der Erfindung ist es, eine Wähleinrichtung der eingangs genannten Art derart weiterzubilden, dass die Wähleinrichtung für eine unterschiedliche Anzahl von Schaltzuständen verwendbar ist und gleichzeitig raumsparend und kostengünstig realisiert werden kann.

Diese Aufgabe wird erfindungsgemäß mit einer Wähleinrichtung nach Anspruch 1 und mit einer Verwendung einer Wähleinrichtung nach Anspruch 8 gelöst. Bevorzugte Weiterbildungen sind in den Unteransprüchen gegeben.

Die erfindungsgemäße Wähleinrichtung zum Schalten eines Fahrzeuggetriebes weist ein um eine Drehachse in unterschiedliche Schaltstellungen drehbares Bedienelement, eine mit dem Bedienelement verbundene und um die Drehachse drehbare Welle, eine mit der Welle verbundene Drehwinkelerfassungseinrichtung, mittels welcher eine Verdrehung des Bedienelements um die Drehachse erfassbar ist, einen Aktuator, mittels welchem ein Drehmoment an die Welle abgebbar oder einer Drehung der Welle ein Drehmoment entgegensetzbar ist, und eine mit der Drehwinkelerfassungseinrichtung, welche wenigstens einen magnetfeldempindlichen Sensor und wenigstens einen relativ zu diesem drehbaren Magneten umfasst, und mit dem Aktuator verbundene Steuereinrichtung auf, mittels welcher das von dem Aktuator abgebbare oder entgegensetzbare Drehmoment steuerbar und das Fahrzeuggetriebe in den Schaltstellungen zugeordnete Schaltzustände schaltbar ist, wobei die Welle sich zwischen der Drehwinkelerfassungseinrichtung und dem Bedienelement entlang der Drehachse erstreckt, welches als Drehknopf oder Drehknauf ausgebildet an einem ersten Ende der Welle angeordnet ist.

Mit Hilfe des Aktuators ist es möglich, einer Bedienperson beim Drehen des als Schaltknauf bzw. Drehknopf ausgebildete Bedienelements haptische Rückmeldungen zu geben, so dass die erfindungsgemäße Wähleinrichtung ohne mechanische Rastierung eingesetzt werden kann. Deshalb ist die erfindungsgemäße Wähleinrichtung für eine unterschiedliche Anzahl von Schaltstellungen verwendbar. Ferner ist die erfindungsgemäße Wähleinrichtung platzsparend realisierbar, da insbesondere das Bedienelement, die Welle und die Drehwinkelerfassungseinrichtung entlang der Drehachse angeordnet sind, so dass auf ein Getriebe bzw. auf einen Riementrieb zum Verbinden der Welle mit der Drehwinkelerfassungseinrichtung verzichtet werden kann. Bei der erfindungsgemäßen Wähleinrichtung sitzt die Drehwinkelerfassungseinrichtung aufgrund ihrer räumlichen Anordnung auf der Welle und ist an dieser befestigt. Das insbesondere fest mit der Welle verbundene Bedienelement kann als separates Teil ausgebildet sein oder das erste Ende der Welle bilden. Bevorzugt schließt sich das Bedienelement stirnseitig an die Welle an. Ferner kann das Bedienelement als oder im Wesentlichen als rotationssymmetrischer Körper mit einer der Welle abgewandten freien Stirnseite ausgebildet sein, durch welche hindurch sich die Drehachse erstreckt. Zusätzlich können rings der Drehachse Erhebungen und/oder Vertiefungen an dem Bedienelement vorgesehen sein, die einen besseren Griff ermöglichen.

Erfindungsgemäß sitzt der Aktuator auf der Welle und ist insbesondere an dieser befestigt, so dass sich die Drehachse durch den Aktuator hindurch erstreckt und das vorstehend genannte Getriebe entfallen kann. Auch hierdurch reduzieren sich Raum- und Kostenbedarf für die erfindungsgemäße Wähleinrichtung. Der Aktuator kann einen Stator und einen relativ zu diesem drehbaren Rotor aufweisen, der die Welle umfasst oder bildet und um die Drehachse drehbar ist. Der Aktuator ist zwischen der Drehwinkelerfassungseinrichtung und dem Bedienelement angeordnet, wobei sich die Welle bevorzugt durch den Aktuator bzw. durch den Stator hindurcherstreckt. Der Aktuator kann als Antrieb, insbesondere als elektrischer Antrieb, wie z.B. ein Elektromotor, ausgebildet sein. Es ist aber auch möglich, den Aktuator als Bremse auszubilden, deren Bremsverhalten insbesondere elektrisch steuerbar ist.

Weiterhin ist erfindungsgemäß die Drehwinkelerfassungseinrichtung an einem zweiten Ende der Welle angeordnet oder bildet dieses, so dass die Welle insbesondere vollständig zwischen der Drehwinkelerfassungseinrichtung und dem Bedienelement angeordnet ist.

Die Drehwinkelerfassungseinrichtung kann als Relativwertgeber ausgebildet sein. Bevorzugt ist die Drehwinkelerfassungseinrichtung aber als Absolutwertgeber ausgebildet, so dass der absolute Verdrehwinkel des Bedienelements zuverlässig und genau ermittelt werden kann.

Erfindungsgemäß weist die Drehwinkelerfassungseinrichtung ferner wenigstens einen magnetfeldempfindlichen Sensor und wenigstens einen relativ zu diesem drehbaren Magneten auf, der insbesondere als Permanentmagnet ausgebildet ist. Der Magnet ist an dem zweiten Ende der Welle, insbesondere stirnseitig, befestigt, wohingegen der magnetfeldempfindliche Sensor im Abstand zur Welle angeordnet ist. Die Magnetisierung des Magneten ist senkrecht zur Drehachse ausgerichtet und der magnetfeldempfindliche Sensor ist gegenüber dem Magneten entlang der Drehachse versetzt angeordnet. Der Sensor sitzt insbesondere fest auf einer Leiterplatte im Abstand zum Magneten.

Der magnetfeldempfindliche Sensor kann zum Beispiel als Hall-Effekt-Sensor oder als magneto-resistiver Sensor ausgebildet sein. Bevorzugt weist der magnetfeldempfindliche Sensor aber wenigstens zwei Hall-Effekt-Elemente auf, die insbesondere im Abstand zueinander angeordnet sind und/oder von einer ferromagnetischen Scheibe, bevorzugt auf der dem Magneten zugewandten Seite, teilweise abgedeckt sein können. Die beiden Hall-Effekt-Elemente können, insbesondere hinsichtlich ihrer sensitiven Flächen, senkrecht zueinander ausgerichtet sein. Diese Ausbildung des magnetfeldempfmdlichen Sensors ermöglicht es, den Absolutwert des Verdrehwinkels mit großer Genauigkeit zu erfassen.

Fällt die Drehwinkelerfassungseinrichtung bzw. der Sensor aus, so sind keine Schaltstellungen mehr erfassbar. Aus diesem Grund kann die
Drehwinkelerfassungseinrichtung redundant ausgebildet sein. Insbesondere ist wenigstens eine zusätzliche Drehwinkelerfassungseinrichtung bzw. wenigstens ein zusätzlicher Sensor vorgesehen, um einen solchen Ausfall abfangen zu können. Sind zwei Sensoren vorgesehen, so können diese z.B. auf einander gegenüberliegenden Seiten der Leiterplatte angeordnet sein.

Der Aktuator ist von der Steuereinrichtung insbesondere derart steuerbar, dass das von dem Aktuator an die Welle abgebbare oder einer Drehung der Welle entgegensetzbare Drehmoment in Abhängigkeit von der erfassten Verdrehung des Bedienelements variierbar ist. Dabei wird insbesondere in den Schaltstellungen kein Drehmoment an die Welle abgegeben oder einer Drehung der Welle entgegengesetzt, wohingegen außerhalb der Schaltstellungen von dem Aktuator ein Drehmoment an die Welle abgegeben oder einer Drehung der Welle entgegengesetzt wird. Bevorzugt kann die Steuereinrichtung den Aktuator derart ansteuern, dass beim Drehen des Bedienelements eine Rastierung nachempfunden wird. Unter einer mechanischen Rastierung soll hier z.B. eine Wellenkontur verstanden werden, entlang welcher ein gegen diese federnd vorgespanntes Gleitelement gleiten kann. Das während des Gleitens für eine das Gleitelement führende Bedienperson auftretende Gefühl kann bevorzugt von der erfindungsgemäßen Wähleinrichtung beim Drehen des Bedienelements nachempfunden werden, ohne dass die mechanischen Rastierung körperlich vorhanden ist. Dennoch kann eine mechanische Rastierung zusätzlich vorgesehen sein. Ebenfalls ist es möglich, den Aktuator von der Steuereinrichtung derart anzusteuern, dass beim Drehen des Bedienelements ein Tastschalter nachempfunden wird.

Über die gesteuerte Variierung des Drehmoments können haptische Rückmeldungen an eine das Bedienelement drehende Bedienperson abgegeben werden, wofür eine Drehmoment-Verdrehwinkel-Kennlinie z.B. in Form einer Kraft-Drehwinkel Tabelle in einem von der Steuereinrichtung auslesbaren Speicher hinterlegt sein kann (die Ausdrücke Kraft und Drehmoment können hier insbesondere synonym verwendet werden). Das von dem Aktuator an die Welle abzugebende oder einer Drehung der Welle entgegenzusetzende Drehmoment ist dann aus der Kennlinie / Kraft-Drehwinkel Tabelle in Abhängigkeit von der erfassten Verdrehung des Bedienelements bestimmbar und an die Welle abgebbar bzw. einer Drehung der Welle entgegensetzbar. Den Schaltstellungen sind insbesondere Nullstellen der Kennlinie zugeordnet, wobei zum Nachbilden einer Rastierung die Kennlinie zumindest bereichsweise einen periodischen Verlauf aufweisen kann. Zwischen den den Schaltstellungen zugeordneten Nullstellen kann wenigstens eine weitere Nullstelle liegen, an der eine Drehmomentumkehr zwischen zwei benachbarten Schaltstellungen erfolgt. Die Kennlinie weist dabei bevorzugt einen derartigen Verlauf auf, dass die den Schaltstellungen zugeordneten Nullstellen stabile Verdrehwinkelpositionen des Bedienelements bilden, wohingegen die der Drehmomentumkehr zugeordnete wenigstens eine Nullstelle eine instabile Verdrehwinkelposition bildet. Vorteilhaft weist die Kennlinie im Bereich der Drehmomentumkehr eine Hysterese auf, um unerwünscht große Drehmomentsprünge zu vermeiden. Ferner können mehrere Drehmomentumkehr-Hysteresen oder -Nullstellen in der Kennlinie vorgesehen sein, insbesondere zwischen zwei benachbarten stabilen Verdrehwinkelpositionen.

Der Aktuator bzw. elektrische Antrieb wird insbesondere mit einem pulsweitenmodulierten Signal von der Steuereinrichtung angesteuert. Zur Erzielung eines besonderen haptischen Effekts kann von der Steuereinrichtung zusätzlich zu dem pulsweitenmodulierten Signal ein periodisches Signal erzeugt werden, das pulsweitenmodulierte Signal mit dem periodischen Signal moduliert werden und das mit dem periodischen Signal modulierte pulsweitenmodellierte Signal dem Aktuator zugeführt werden. Dieser Effekt führt zu einer für die Bedienperson wahrnehmbaren Vibration des Bedienelements und kann insbesondere zur Kenntlichmachung einer (logischen) Endstellung des Bedienelements verwendet werden.

Bei ausgeschaltetem Aktuator ist das Bedienelement insbesondere frei drehbar. Diese freie Drehbarkeit kann aber auch bei einem defekten Aktuator auftreten, was zu Fehlbedienungen führen kann, da der Bedienperson ein Schaltgefühl nicht vermittelt wird. Ferner kann es aufgrund von Vibrationen im Fahrzeug zu einer Verdrehung des Bedienelements bzw. der Welle und somit zu einem ungewollten Umschalten des Getriebes kommen. Damit ein solches ungewolltes Umschalten nicht auftritt und der Bedienperson trotz eines defekten Aktuators ein Schaltgefühl beziehungsweise eine haptische Rückmeldung beim Umschalten zwischen den Schaltstellungen vermittelt werden kann, ist es möglich, eine Hilfsrastierung vorzusehen, die bevorzugt ausschaltbar und einschaltbar ist, insbesondere unabhängig vom Aktuator betreibbar ist. Wird zum Beispiel von der Steuereinrichtung ein defekter Zustand des Aktuators erfasst, kann die Hilfsrastierung von der Steuereinrichtung zugeschaltet werden. Die Hilfsrastierung kann als mechanische Rastierung ausgebildet sein und z.B. über eine schaltbare Kupplung mit der Welle verbunden werden. Bevorzugt können zum Ausbilden der Hilfsrastierung aber, insbesondere zusätzlich zum Aktuator, mehrere erste Elemente mit der Welle verbunden und rings einer Drehachse vorgesehen sein, mehrere zweite Elemente rings der Drehachse vorgesehen sein, relativ zu welchen die ersten Elemente um die Drehachse drehbar sind, wobei die ersten und die zweiten Elemente Magnetwerkstoff, Permanentmagnete und/oder Elektromagnete aufweisen, und wobei die ersten Elemente mit den zweiten Elementen unter Ausbildung einer magnetischen Rastierung magnetisch in Wechselwirkung treten können. Insbesondere sind die ersten Elemente ortsfest zum Bedienelement und/oder fest an der Welle angeordnet, wobei die zweiten Elemente bevorzugt rings der Welle und/oder der zweiten Elemente angeordnet sind. Sind die ersten Elemente zum Beispiel aus Magnetwerkstoff oder von Permanentmagneten gebildet, und sind die zweiten Elemente zum Beispiel von Elektromagneten gebildet, so ist es möglich, dass beim Einschalten eines oder mehrerer der Elektromagneten zwischen diesem oder diesen und einem oder mehreren der ersten Elemente magnetische Kräfte wirken, die stabile und instabile Drehwinkelpositionen für das Bedienelement schaffen. Für die Bedienperson wird somit eine Rastierung nachempfunden, wobei die stabilen Verdrehwinkelstellungen bevorzugt mit den Schaltstellungen des Bedienelements zusammenfallen. Die ersten Elemente sind insbesondere rings der Drehachse der Welle angeordnet. Ferner sind auch die zweiten Elemente bevorzugt rings der Drehachse der Welle angeordnet, insbesondere aber im Abstand zu dieser. Bei intaktem Aktuator kann die Hilfsrastierung ausgeschaltet sein, die örtlich vom Aktuator getrennt angeordnet oder auch in diesem integriert sein kann. Ergänzend oder alternativ zu einer Hilfsrastierung ist auch eine Blockierung des Bedienelements bzw. der Welle möglich.

Zum Anzeigen des aktuellen Schaltzustandes können den Schaltstellungen Anzeigeelemente zugeordnet sein, die von der Steuereinrichtung ansteuerbar sind und insbesondere auf einem um die Drehachse verlaufenden Bogen liegen.

Die Steuereinrichtung kann wenigstens eine Schnittstelle, z.B. zu einem CAN-Bus eines Fahrzeugs, aufweisen, um Informationen an andere Einrichtungen im Fahrzeug abzugeben, die ebenfalls unmittelbar oder mittelbar mit der Schnittstelle beziehungsweise mit dem Bus verbunden sind. Insbesondere ist Steuereinrichtung mit einem Getriebesteuergerät des Getriebes verbunden, um das Getriebesteuergerät in eine andere Betriebsart zu schalten, zwischen den Schaltzuständen des Getriebes umzuschalten und/oder einen aktuellen Schaltzustand des Getriebes auszulesen. Diese Verbindung kann unmittelbar oder über die Schnittstelle beziehungsweise über den Bus erfolgen. Ferner ist es möglich, eine Parkbremse des Fahrzeugs in einer bestimmten Schaltstellung zu verriegeln. Auch dies kann über die Schnittstelle beziehungsweise über den Bus erfolgen.

Von dem Aktuator kann einer Drehung der Welle ein Drehmoment entgegengesetzt oder ein Drehmoment an die Welle abgegeben werden, welches insbesondere um die Drehachse herum wirkend an der Welle angreift. Der Drehmomentvektor liegt somit bevorzugt auf der Drehachse. Ferner kann die Welle von dem Aktuator, bei geeigneter Ausgestaltung (z.B. Antrieb) desselben, um die Drehachse gedreht werden. Daher ist es möglich, den Aktuator durch die Steuereinrichtung derart ansteuern, dass beim Einschalten der Wähleinrichtung das Bedienelement in eine bestimmte Position gedreht wird. Diese Position kann z.B. vorbestimmt sein, aus einem Speicher ausgelesen werden oder von dem Fahrzeuggetriebe bzw. von dessen Getriebesteuergerät abgefragt werden. Ein solches Anfahren der bestimmten Position ist insbesondere dann sinnvoll, wenn das Bedienelement mit einer festen Markierung versehen ist, die den aktuellen Schaltzustand anzeigt.

Die erfindungsgemäße Wähleinrichtung weist insbesondere ein Gehäuse oder eine Halterung auf, an der das Bedienelement und/oder die Welle drehbar gelagert sind. Ferner kann der Stator des Aktuators und/oder ein Gehäuse des Aktuators ortsfest zu der Halterung festgelegt, insbesondere an dieser befestigt sein. Eine Verdrehung des Bedienelement oder der Welle erfolgt dann relativ zu dieser Halterung. Gemäß einer Ausführungsform der Erfindung bildet die Verdrehung des Bedienelements und der Welle um die Drehachse den einzigen Freiheitsgrad hinsichtlich einer Bewegung des Bedienelements und der Welle relativ zu der Halterung. Alternativ sind aber auch andere Freiheitsgrade möglich, wie z.B. eine axiale Bewegung des Bedienelements und/oder der Welle entlang der Drehachse und/oder eine Schwenk- oder Querbewegung des Bedienelements und/oder der Welle quer zur Drehachse.

Ferner betrifft die Erfindung ein Fahrzeug, insbesondere Kraftfahrzeug, mit einer erfindungsgemäßen Wähleinrichtung und einem Fahrzeuggetriebe, welches (gegebenenfalls unter Zwischenschaltung eines Getriebesteuergeräts) mit der Wähleinrichtung verbunden, insbesondere elektrisch verbunden, ist, wobei das Getriebe von der Wähleinrichtung in Abhängigkeit vom erfassten Verdrehwinkel des Bedienelements in unterschiedliche Schaltzustände schaltbar ist. Die Wähleinrichtung kann dabei gemäß allen zuvor genannten Ausgestaltungen weitergebildet sein.

Zusätzlich betrifft die Erfindung die Verwendung einer erfindungsgemäßen Wähleinrichtung zum Schalten eines Fahrzeuggetriebes, insbesondere Kraftfahrzeuggetriebes. Die Wähleinrichtung kann auch hierbei gemäß allen zuvor genannten Ausgestaltungen weitergebildet sein.

Die Erfindung wird nachfolgend anhand bevorzugter Ausführungsformen unter Bezugnahme auf die Zeichnung beschrieben. In der Zeichnung zeigen:
- Fig. 1:: eine perspektivische Ansicht einer ersten Ausführungsform der erfindungsgemäßen Wähleinrichtung,
- Fig. 2:: eine geschnittene Ansicht der ersten Ausführungsform,
- Fig. 3:: eine schematische Darstellung der ersten Ausführungsform,
- Fig. 4:: eine schematische Darstellung einer Drehwinkelerfassungseinrichtung gemäß derersten Ausführungsform,
- Fig. 5:: eine schematische Darstellung eines magnetfeldempfindlichen Sensors der Drehwinkelerfassungseinrichtung,
- Fig. 6:: ein Blockschaltbild einer Steuereinrichtung gemäß der ersten Ausführungsform,
- Fig. 7:: eine Motorschnittstelle der Steuereinrichtung,
- Fig. 8:: Signalverläufe der Motorschnittstelle,
- Fig. 9:: mehrere Verdrehwinkelpositionen des Bedienelements und diesen zugeordnete Schaltzustände des Fahrzeuggetriebes,
- Fig. 10:: eine Drehmoment-Verdrehwinkel-Kennlinie
- Fig. 11:: die Kennlinie nach Fig. 10 mit eingezeichneten Hysteresen,
- Fig. 12:: ein regelungstechnisches Ersatzschaltbild der erfindungsgemäßen Wähleinrichtung,
- Fig. 13:: eine schematische Ansicht einer zuschaltbaren magnetischen Hilfsrastierung,
- Fig. 14:: eine schematische Ansicht einer redundanten Sensoranordnung und
- Fig. 15:: eine schematische Ansicht einer zweiten Ausführungsform der Wähleinrichtung (nicht beansprucht).

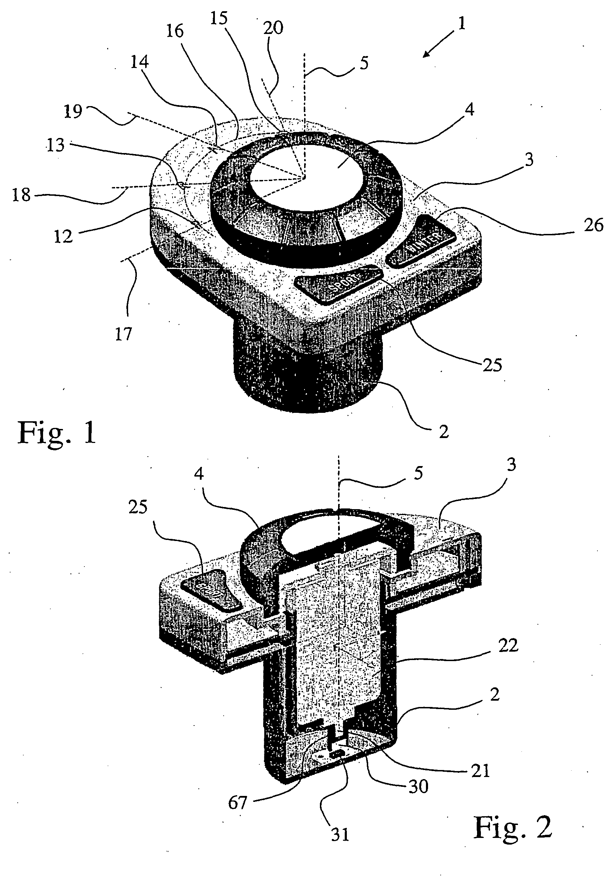

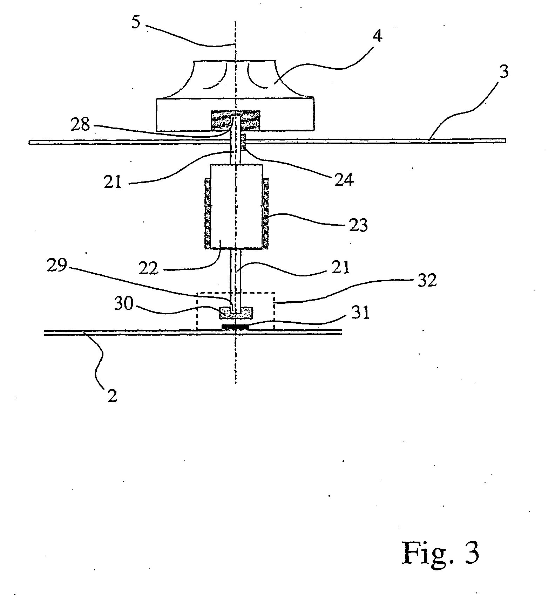

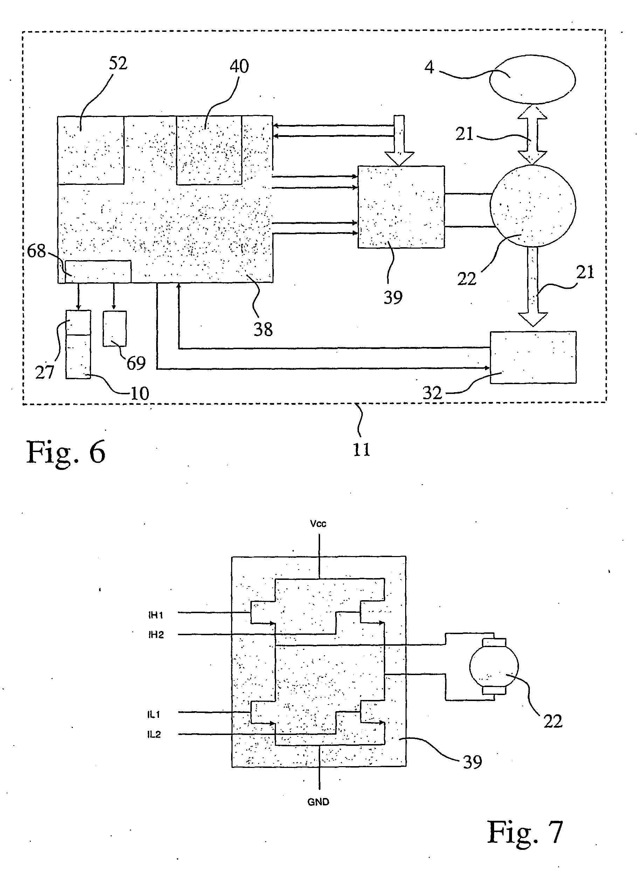

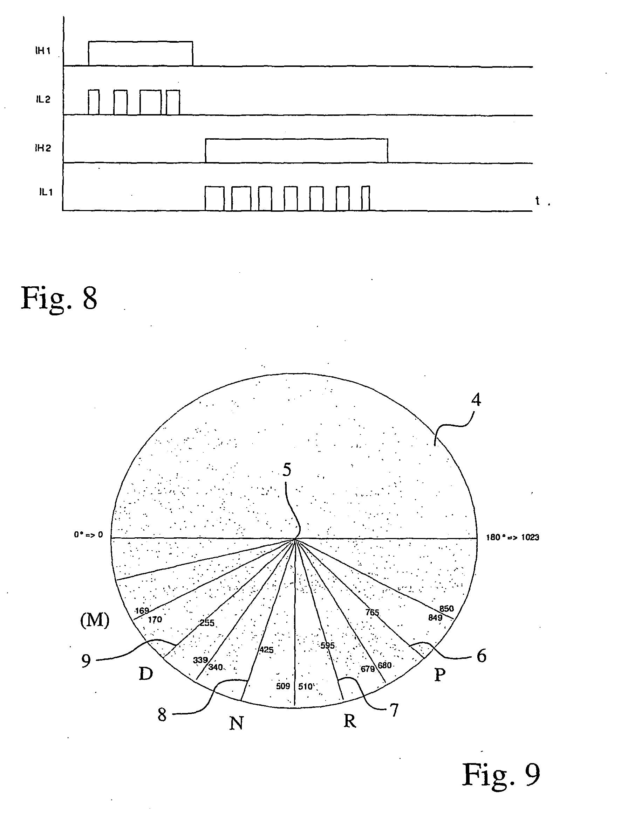

Aus den Figuren 1 bis 3 sind unterschiedliche Darstellungen einer ersten Ausführungsform der erfindungsgemäßen Wähleinrichtung 1 ersichtlich, die ein Gehäuse 2, eine an diesem befestigte Abdeckung 3 und ein als Drehknauf ausgebildetes Bedienelement 4 aufweist, welches auf der dem Gehäuse 2 abgewandten Seite der Abdeckung 3 von dieser hervorragt und um eine Drehachse 5 relativ zum Gehäuse 2 und der Abdeckung 3 drehbar ist. Das Bedienelement 4 kann um die Drehachse 5 in mehrere Schaltstellungen 6, 7, 8 und 9 (siehe Fig. 9) gedreht werden, die Schaltzuständen P, R, N und D (siehe Fig. 9) eines Getriebes 10 (siehe Figur 6) eines Kraftfahrzeugs 11 (siehe Figur 6) zugeordnet sind. Ferner sind optische Anzeigeelemente 12, 13, 14 und 15 an der Abdeckung 3 vorgesehen, die auf einem Kreisbogen 16 rings der Drehachse 5 beziehungsweise des Bedienelements 4 angeordnet sind. Die Anzeigeelemente 12, 13, 14 und 15 sind den Schaltzuständen P, R, N und D des Getriebes 10 zugeordnet, wobei das dem aktuellen Schaltzustand zugeordnete Anzeigeelement diesen Schaltzustand gegenüber den anderen Anzeigeelementen, zum Beispiel durch Leuchten, optisch hervorhebt. Die Anzeigeelemente 12, 13, 14 und 15 liegen dabei auf Geraden 17, 18, 19 und 20, welche die Drehachse 5 schneiden und senkrecht zu dieser ausgerichtet sind. Die Geraden 17, 18, 19 und 20 repräsentieren bzw. kennzeichnen dabei Verdrehwinkelpositionen des Bedienelements 4, die mit den Schaltstellungen 6, 7, 8 und 9 zusammenfallen.

Das Bedienelement 4 ist mit einer Welle 21 drehfest verbunden, die gleichzeitig die Antriebswelle eines Antriebs 22 bildet, der hier als Elektromotor ausgebildet ist und als Antrieb für die Welle 21 dient. Der Antrieb 22 kann somit die Welle 21 drehen beziehungsweise ein Drehmoment an die Welle 21 abgeben. Ferner weist der Antrieb 22 einen Stator 23 auf, der am Gehäuse 2 befestigt ist, wobei sich die über ein Lager 24 an der Abdeckung 3 beziehungsweise am Gehäuse 2 drehbar gelagerte Welle 21 durch den Antrieb 22 beziehungsweise durch den Stator 23 hindurch erstreckt.

Die Abdeckung 3 ist gemäß dieser Ausführungsform ein mit dem Gehäuse 2 fest verbundenes separates Teil, welches entweder dauerhaft oder lösbar mit dem Gehäuse 2 verbunden ist. Alternativ ist es möglich, die Abdeckung 3 mit dem Gehäuse 2 einteilig auszubilden. Ferner sind an der Abdeckung 3 zwei Tastschalter 25 und 26 vorgesehen, mittels welchen das Getriebe 10 beziehungsweise ein mit dem Getriebe 10 verbundenes Getriebesteuergerät 27 (siehe Fig. 6) in unterschiedliche Betriebsarten geschaltet werden kann.

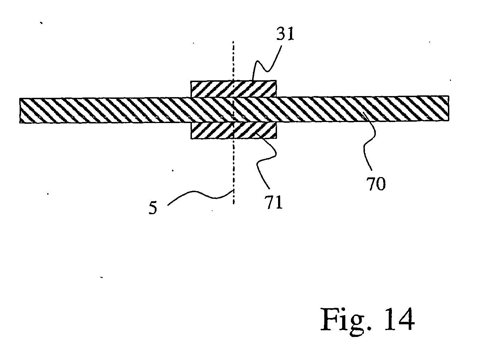

Das Bedienelement 4 ist an einem sich aus dem Gehäuse 2 heraus- und durch die Abdeckung 3 hindurcherstreckenden ersten Ende 28 der Welle 21 befestigt und mit dieser drehfest verbunden. An dem dem ersten Ende 28 gegenüberliegenden zweiten Ende 29 der Welle 21 ist ein Permanentmagnet 30 mittels einer Magnethalterung 67 befestigt, der drehfest mit der Welle 21 verbunden ist und zusammen mit einem magnetfeldempfindlichen Sensor 31 eine Drehwinkelerfassungsreinrichtung 32 bildet. Der magnetfeldempfindliche Sensor 31 ist unter Zwischenschaltung einer Leiterplatte 70 (siehe Fig. 14) an dem Gehäuse 2 befestigt und entlang der Drehachse 5 gegenüber dem Magneten 30 versetzt angeordnet.

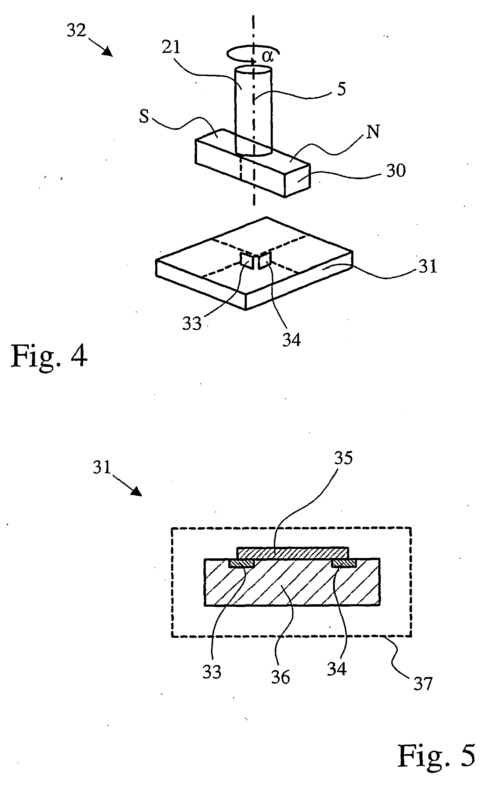

Aus Figur 4 ist eine vergrößerte, schematische Darstellung der Drehwinkelerfassungseinrichtung 32 ersichtlich, wobei die Magnetisierung des Magneten 30 senkrecht zur Drehachse 5 ausgerichtet ist, was aus den Bezeichnungen N für den magnetischen Nordpol und S für den magnetischen Südpol des Permanentmagneten 30 deutlich wird. Der magnetfeldempfindliche Sensor 31 weist zwei im Abstand zueinander angeordnete und insbesondere senkrecht zueinander ausgerichtete Hall-Effekt-Elemente 33 und 34 auf, mittels welchen die Verdrehung α des Magneten 30 gegenüber dem magnetfeldempfindlichen Sensor 31 erfassbar ist. Da der Magnet 30 drehfest mit der Welle 21 und diese wiederum drehfest mit dem Bedienelement 4 verbunden ist, beschreibt der Winkel α auch die Verdrehung des Bedienelements 4 gegenüber dem Gehäuse 2 beziehungsweise der Abdeckung 3, so dass von der Drehwinkelerfassungseinrichtung 32 der Verdrehwinkel des Bedienelements 4 gegenüber dem Gehäuse 2 erfassbar ist.

Wie aus Figur 5 ersichtlich, sind die Hall-Effekt-Elemente 33, 34 von einer ferromagnetischen Scheibe 35 teilweise abgedeckt, die den Abstand zwischen den beiden Hall-Effekt-Elementen 33 und 34 überbrückt. Ferner sind die beiden Hall-Effekt-Elemente 33 und 34 auf einem gemeinsamen Substrat 36 angeordnet und insbesondere zusammen mit der ferromagnetischen Scheibe 35 und dem Substrat 36 in einem gemeinsamen Sensorgehäuse 37 angeordnet, so dass sich ein kompakter Sensoraufbau ergibt.

Aus Figur 6 ist ein schematisches Blockschaltbild der Wähleinrichtung 1 ersichtlich, wobei eine Steuereinrichtung 38 mit dem Getriebesteuergerät 27 des Getriebes 10 elektrisch verbunden ist. Ferner ist die insbesondere einen Digitalrechner oder Mikrokontroller 52 aufweisende Steuereinrichtung 38 elektrisch mit einer Motorschnittstelle 39 verbunden, die wiederum elektrisch mit dem Motor 22 verbunden ist. Obwohl die Motorschnittstelle 39 als separates Bauelement dargestellt ist, ist sie bevorzugt der Steuereinrichtung 38 zuzurechnen.
Der Elektromotor 22 wirkt über die Welle 21 mechanisch mit dem Bedienelement 4 und mit der Drehwinkelerfassungseinrichtung 32 zusammen, die ebenfalls elektrisch mit der Steuereinrichtung 38 verbunden ist. Ferner weist die Steuereinrichtung 38 einen Speicher 40 auf und ist insbesondere mit einer Parkbremse 69 elektrisch verbunden, die im Schaltzustand P des Getriebes 10 von der Steuereinrichtung 38 betätigt werden kann. Die elektrische Verbindung zwischen der Steuereinrichtung 38 und der Parkbremse 69 erfolgt über eine Schnittstelle 68 und insbesondere unter Zwischenschaltung eines CAN-Busses, über welchen die Steuereinrichtung 38 auch mit anderen Einrichtungen oder Geräten Daten austauschen kann. Die gesamte aus Figur 6 ersichtliche Vorrichtung ist in dem schematisch dargestellten Kraftfahrzeug 11 angeordnet.

Aus Figur 7 ist eine detailliertere Darstellung der mit dem Motor 22 verbundenen Motorschnittstelle 39 ersichtlich, die über vier Signalleitungen IH1, IH2, IL1 und IL2 von der Steuereinrichtung 38 angesteuert wird. Wie aus den zugehörigen Signalverläufen gemäß Figur 8 ersichtlich, kann dabei der Drehsinn der (Motor-)Welle 21 über die Signalleitungen 1H1 und IH2 gesteuert werden, wohingegen den Signalleitungen IL1 oder IL2 ein pulsweitenmoduliertes Signal zugeführt wird, mittels welchem insbesondere der Betrag des von dem Elektromotor 22 an die Welle 21 abgegebenen oder abgebbaren Drehmoments bestimmt beziehungsweise gesteuert wird. Die Steuerung des Motors erfolgt dabei bevorzugt über die Einstellung des Tastverhältnisses des pulsweitenmoduliertes Signals.

Aus Figur 9 sind mehrere Verdrehwinkelpositionen des Bedienelements 4 und die diesen zugeordneten Schaltzustände P, R, N, D des Kraftfahrzeuggetriebes 10 schematisch dargestellt, wobei ein kontinuierlicher Winkelbereich von 180° mit 10 Bit diskret aufgelöst wird. Somit ergeben sich insgesamt 1024 erfassbare Verdrehwinkelwerte, wobei einem Verdrehwinkel von 0° ein Wert von Null und einem Verdrehwinkel von 180° ein Wert von 1023 zugeordnet wird. Diese Quantisierung des Winkelbereichs ist fein genug, um den Verdrehwinkel α des Bedienelements 4 mit ausreichender Genauigkeit aufzulösen. Die dem Schaltzustand P zugeordnete Schaltstellung 6 wird dabei durch den Wert 765 charakterisiert, die dem Schaltzustand R zugeordnete Schaltstellung 7 wird durch den Wert 595 charakterisiert, die dem Schaltzustand N zugeordnete Schaltstellung 8 wird durch den Wert 425 charakterisiert und die dem Schaltzustand D zugeordnete Schaltstellung 9 wird durch den Wert 255 charakterisiert. Ferner ist ein in Klammern dargestellter Schaltzustand M des Getriebes 10 dargestellt, der ein manuelles Herauf- und Herunterschalten der Gänge mittels zusätzlich vorsehbarer Tastschalter ermöglicht, die zum Beispiel an einem Lenkrad des Kraftfahrzeugs angeordnet sein können. Der Schaltzustand M ist in Klammern dargestellt, da er lediglich optional vorgesehen ist.

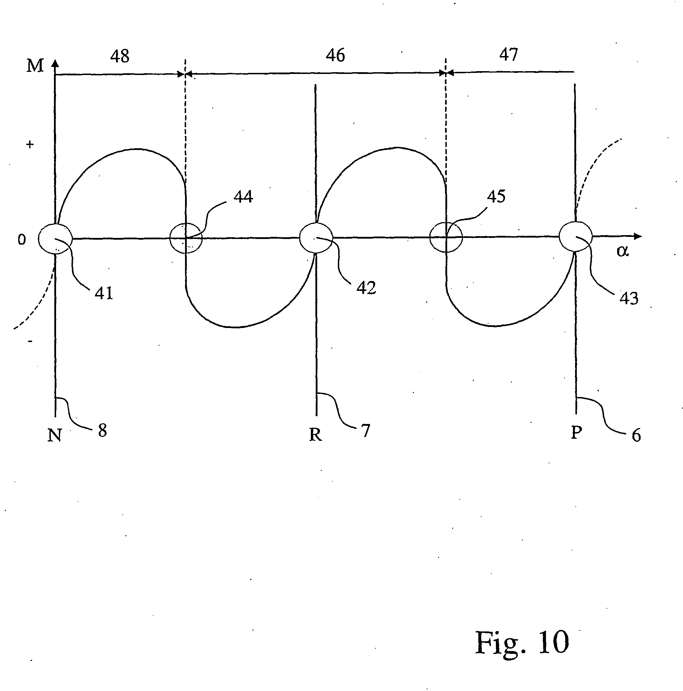

In Figur 10 ist eine teilweise Drehmoment-Drehwinkel-Kennlinie dargestellt, die insbesondere als Tabelle in dem Speicher 40 hinterlegt ist. Dabei ist das von dem Elektromotor 22 an die Welle 21 abzugebende Drehmoment M über den Verdrehwinkel α des Bedienelements 4 beziehungsweise der Welle 21 aufgetragen. Bei dieser teilweisen Darstellung sind lediglich die Schaltzustände N, R und P berücksichtigt worden. Durch den in Figur 10 gezeigten Drehmomentverlauf wird für die Bedienperson, welche das Bedienelement 4 dreht, das Gefühl einer Rastierung nachgebildet. Insbesondere weist die Kennlinie in den Schaltstellungen 6, 7 und 8 jeweils eine Nullstelle 41, 42, 43 auf, so dass in den Schaltstellungen 6, 7, 8 kein Drehmoment auf das Bedienelement 4 ausgeübt wird. Insbesondere bilden die Schaltstellungen 6, 7, 8 dabei stabile Verdrehwinkelpositionen des Bedienelements 4. Ferner weist die Kennlinie zwischen den Schaltstellungen 7 und 8 und 6 und 7 jeweils eine Nullstelle 44, 45 auf, die bevorzugt mittig zwischen den jeweiligen Schaltstellungen liegt. Wird nun zum Beispiel das Bedienelement aus der Schaltstellung 8 in die Schaltstellung 7 gedreht, so wirkt dieser Drehbewegung bis zur Nullstelle 44 ein Drehmoment entgegen, welches aber von der Bedienperson überwunden werden kann. Im Bereich der Nullstelle 44 wechselt das Drehmoment nahezu sprunghaft sein Vorzeichen, so dass das Drehmoment nun in Richtung einer-Drehung auf die Schaltstellung 7 wirkt. Wird ausgehend von der Schaltstellung 7 das Bedienelement 4 in Richtung der Schaltstellung 6 gedreht, so wird zwischen den Nullstellen 42 und 45 ein Drehmoment auf das Bedienelement 4 ausgeübt, das dieser Drehbewegung entgegenwirkt. Im Bereich der Nullstelle 45 ändert das Drehmoment nahezu sprunghaft sein Vorzeichen, so dass das Drehmoment nun in Richtung einer Drehung auf die Schaltstellung 6 wirkt. Entsprechende Wirkungen treten beim Zurückdrehen des Bedienelements 4 hin zu kleineren Winkeln α auf, so dass für die Bedienperson der Eindruck entsteht, als würde beim Drehen des Bedienelements 4 eine mechanische Rastierung durchlaufen. Dabei wird der Schaltstellungsbereich 46 zwischen den Drehmomentumkehrpunkten 44 und 45 der Schaltstellung 7 zugeordnet, der Schaltstellungsbereich 47 zwischen dem Drehmomentumkehrpunkt 45 und der Nullstelle 43 der Schaltstellung 6 zugeordnet und der Schaltstellungsbereich 48 zwischen dem Drehmomentumkehrpunkt 44 und der Nullstelle 41 der Schaltstellung 8 zugeordnet. Hierbei ist zu berücksichtigen, dass Figur 10 lediglich einen Teil der Kennlinie darstellt, so dass in Richtung kleinerer Werte für α links von der Schaltstellung 8 noch ein weiterer Drehmomentumkehrpunkt und eine weitere Nullstelle vorgesehen sein können, welche der Schaltstellung 9 für den Schaltzustand D entspricht. In diesem Fall kann sich der Bereich 48 bis zu diesem nicht dargestellten Drehmomentumkehrpunkt erstrecken.

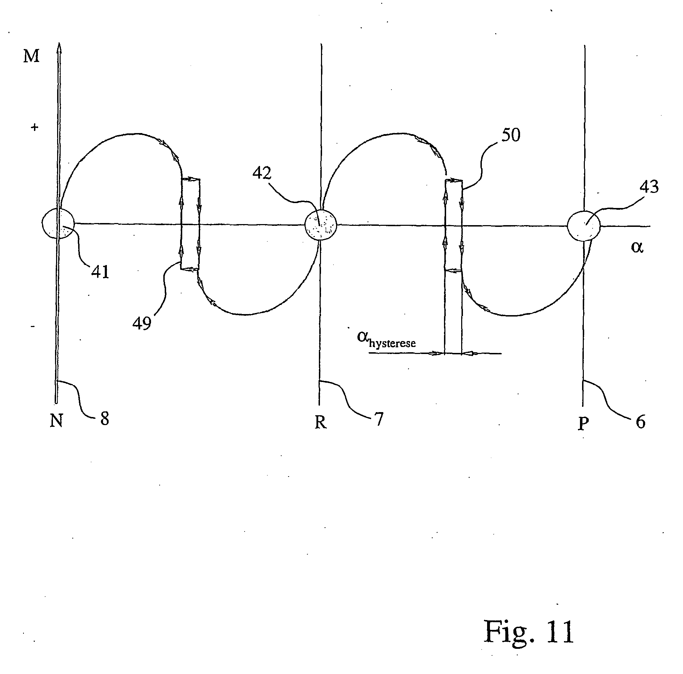

Aus Figur 11 ist ersichtlich, dass die Drehmomentumkehr beim Wechseln der Schaltstellungsbereiche bevorzugt durch eine Hysterese 49, 50 erfolgt, das heißt, dass bei gleichen Sensorsignalen der Zustand des Motors von der Vergangenheit abhängen kann. Die Hysterese wird an der Grenze zwischen zwei benachbarten Schaltstellungsbereichen verwirklicht, um große Drehmomentsprünge zu vermeiden, die aufgrund eines Quantisierungsrauschens eines AD-Wandlers auftreten können, der zum Beispiel die aktuelle Winkelstellung des Bedienelements 4 in die diskreten 10 Bit-Werte umwandelt. Der Bereich für die Hysterese kann im Kraft- beziehungsweise Drehmomentfeld durch eine "ungültige" Zahl markiert sein, die nicht für die Berechnung der Pulsweite des Ansteuersignals für den Motor 22 gebraucht wird. Durch dieses Verfahren lassen sich die Schaltstellungsbereiche 46, 47 und 48 unabhängig von eventuellen Störungen des Messsignals mit ausreichender Genauigkeit eindeutig bestimmen. Entsprechendes gilt für den nicht dargestellten Schaltstellungsbereich, welcher der Schaltstellung 9 zugeordnet ist. Wie in Figur 11 verdeutlicht, wird beim Wechsel zwischen den Schaltstellungsbereichen der letzte Wert des Drehmoments im Bereich αhysterese gehalten. Wenn das Drehmoment beim Verlassen des aktuellen Schaltstellungsbereichs sein Vorzeichen ändert, muss das Bedienelement wieder die Strecke α_{hysterese} zurücklegen, bevor das Vorzeichen (wieder) umkehrt. Im Bereich der Hysterese kann das Drehmoment also mit verschiedenen Vorzeichen auftreten, je nach der vorherigen Drehrichtung.

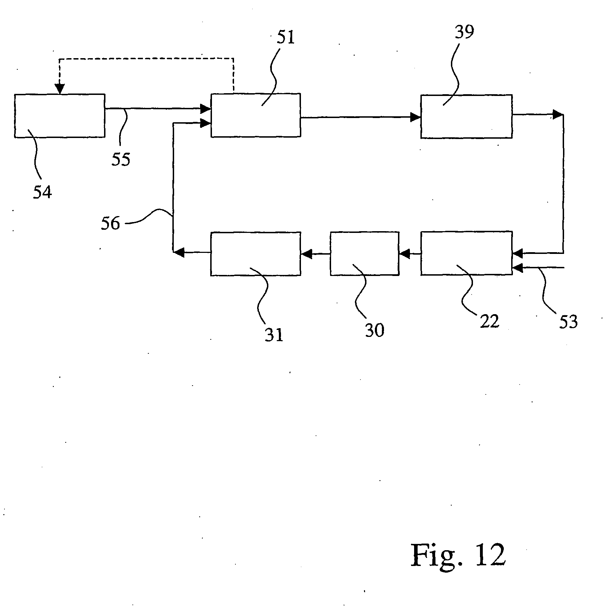

Aus Figur 12 ist ein regelungstechnisches Ersatzschaltbild der Wähleinrichtung 1 ersichtlich, wobei ein von der Steuereinrichtung 38 gebildeter Regler 51 auf die Motorschnittstelle 39 wirkt, welche den Antrieb beziehungsweise Elektromotor 22 ansteuert, der mit dem Magneten 30 zusammenwirkt, der relativ zum Sensor 31 drehen kann, dessen Ausgangssignal dem Regler 51 zugeführt wird. Ferner kann über das Bedienelement 4 die Welle 21 des Antriebs 22 von der Bedienperson verdreht werden, was in dem Ersatzschaltbild als dem Antrieb 22 zugeführte Störgröße 53 dargestellt ist. Ferner wird dem Regler 51 eine Soll-Schaltstellung 54 als Sollgröße 55 zugeführt, die zum Beispiel dadurch ermittelt werden kann, dass über den erfassten Verdrehwinkel α der aktuelle Schaltstellungsbereich bestimmt und der zugehörigen Schaltstellung zugeordnet wird. Die Vorgabe der Sollgröße erfolgt z.B. über eine Verdrehung des Bedienelements 4 bzw. der Welle 21. Da dem Regler 51 der Verdrehwinkel α als Mess- oder Istgröße 56 zugeführt wird, kann die Sollgröße auch vom Regler 51 selbst bestimmt bzw. deren Vorgabe vom Regler 51 selbst initiiert werden, was mit einem gestrichelt dargestellten Pfeil angedeutet ist. Wird zum Beispiel der Schaltstellungsbereich 46 erfasst, so ist der Sollwert 55 durch die Schaltstellung 7 beziehungsweise durch den Schaltzustand R gegeben. Wird hingegen der Schaltstellungsbereich 47 erfasst, so ist der Sollwert 55 durch die Schaltstellung 6 beziehungsweise durch den Schaltzustand P gekennzeichnet. Wird der Schaltstellungsbereich 48 erfasst, so ist der Sollwert 55 durch die Schaltstellung 8 beziehungsweise durch den Schaltzustand N gekennzeichnet. Entsprechendes gilt für den Schaltzustand D.

Wenn das Bedienelement 4 ausgehend von der Schaltstellung 6 beziehungsweise vom Schaltzustand P von der Bedienperson in Richtung zunehmender Winkelwerte α gedreht wird, so kann der Antrieb 22 dieser Drehbewegung ein konstantes Drehmoment entgegensetzen, da der Schaltstellung 6 in Richtung zunehmender Verdrehwinkelwerte α gemäß dieser Ausführungsform kein weiterer Schaltzustand mehr folgt. Der Bedienperson wird somit signalisiert, dass durch Weiterdrehen des Bedienelements keine gültige Schaltstellung mehr erreichbar ist. Insbesondere kann dem pulsweitenmodulierten Signal zum Ansteuern des Antriebs 22 dabei ein periodisches Signal überlagert werden, das zusätzlich zu dem wirkenden Drehmoment eine Vibration des Bedienelements hervorruft, die von der Bedienperson fühlbar. Dieser Effekt macht es der Bedienperson noch deutlicher, dass durch Weiterdrehen des Bedienelements 4 in Richtung zunehmender Verdrehwinkelwerte α keine gültige Schaltstellung mehr erreichbar ist. Wenn die optionale Schaltstellung M gemäß Figur 9 vorgesehen wird, ist es ferner möglich, dass ausgehend von der Schaltstellung 9 dem Drehen des Bedienelements in Richtung kleiner werdender Verdrehwinkel α ein insbesondere größer werdendes Drehmoment entgegengesetzt wird, das allerdings einen Maximalwert nicht überschreitet. Der optionale Schaltzustand M bildet dabei einen instabilen Zustand ohne Drehmomentumkehr, was der Bedienperson das Gefühl vermittelt, als würde ein mechanischer Drehtaster betätigt. Die in den Figuren 10 und 11 gezeigten Drehmomentverläufe sind lediglich beispielhaft und können an die Wünsche der Bedienperson angepasst werden.

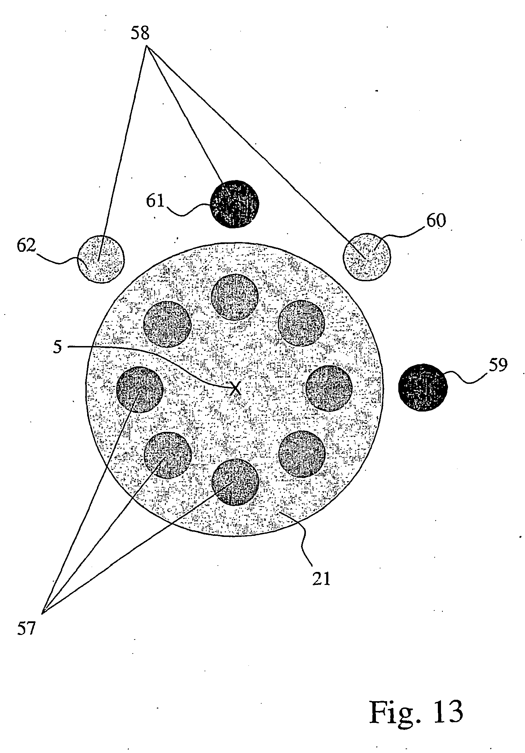

Aus Figur 13 ist eine schematische Schnittansicht einer zuschaltbaren magnetischen Hilfsrastierung ersichtlich, wobei an oder in der Welle 21 rings der Drehachse 5 mehrere aus Magnetwerkstoff oder von Permanentmagneten gebildete erste Elemente 57 angeordnet sind. Ferner sind rings der Welle 21 mehrere als Elektromagneten ausgebildete zweite Elemente 58 vorgesehen sind, relativ zu welchen die ersten Elemente 57 zusammen mit der Welle 21 um die Drehachse 5 drehbar sind. Die Elektromagnete 58 können nun einzeln, in Gruppen oder alle bzw. gemeinsam von elektrischem Strom durchflossen und somit eingeschaltet werden, wodurch magnetische Kräfte zwischen den ersten Elementen 57 und den zweiten Elementen 58 wirken. Da die ersten Elemente 57 im Abstand zueinander und bevorzugt gleichmäßig rings der Drehachse 5 verteilt angeordnet sind, ändern sich diese Kräfte insbesondere periodisch, wenn das Bedienelements 4 in eine Richtung gedreht wird, so dass für die Bedienperson der Eindruck einer Rastierung hervorgerufen wird. Auch die zweiten Elemente 58 weisen einen Abstand zueinander auf, wobei weniger zweite Elemente 58 als erste Elemente 57 vorgesehen sein können. Gemäß Figur 13 sind die Elektromagneten 59 und 61 eingeschaltet, wohingegen die Elektromagneten 60 und 62 ausgeschaltet sind. Ferner ist es möglich, die Elektromagneten 60 und 62 einzuschalten und die Elektromagneten 59 und 61 auszuschalten. Wird die Hilfsrastierung nicht benötigt, können alle Elektromagnete 59, 60, 61 und 62 ausgeschaltet sein.

Die Hilfsrastierung wird von der Steuereinrichtung 38 eingeschaltet, wenn diese einen Defekt in dem Antrieb 22 ermittelt hat, da sonst eine freie Drehbarkeit des Bedienelementes 4 auftreten könnte. Somit kann der Bedienperson beim Drehen des Bedienelements 4 auch dann ein eine Rastierung nachbildendes Gefühl vermittelt werden, wenn der Antrieb 22 ausgefallen ist. Die Einstellungsmöglichkeiten des Drehmomentverlaufs dieser Hilfsrastierung sind allerdings eingeschränkt. Alternativ ist es möglich, die Hilfsrastierung dauerhaft einzuschalten.

Fig. 14 zeigt schematisch den magnetfeldempfindlichen Sensor 31, der auf der im Gehäuse 2 angeordneten Leiterplatte 70 sitzt. Auf der dem Sensor 31 bzw. dem Magneten 30 abgewandten Seite der Leiterplatte 70 ist ein zweiter magnetfeldempfindlicher Sensor 71 angeordnet, der zur redundanten Erfassung des Drehwinkels α dient. Beide Sensoren liegen auf der Drehachse 5 bzw. auf einer Verlängerung derselben und sind insbesondere gleichartig aufgebaut.

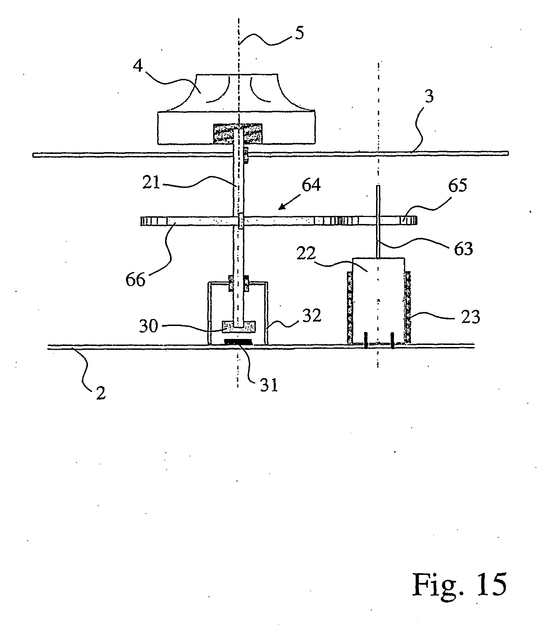

Aus Figur 15 ist eine zweite, nicht beanspruchte Ausführungsform der Wähleinrichtung ersichtlich, wobei zu der ersten Ausführungsform gleiche oder ähnliche Merkmale mit denselben Bezugszeichen wie bei der ersten Ausführungsform bezeichnet sind. Die zweite Ausführungsform unterscheidet sich von der ersten Ausführungsform lediglich dadurch, dass der Antrieb 22 nicht auf der Welle 21 sitzt, sondern im Abstand zu dieser an dem Gehäuse 2 befestigt ist. Die Antriebswelle beziehungsweise der Rotor 63 des Antriebs 22 ist mit der Welle 21 über ein Getriebe 64 verbunden, welches ein drehfest mit der Antriebswelle 63 verbundenes erstes Stirnrad 65 und ein mit der Welle 21 drehfest verbundenes zweites Stirnrad 66 aufweist, welches mit dem ersten Stirnrad 65 kämmt.

### Bezugszeichenliste

- 1.: Wähleinrichtung
- 2.: Gehäuse
- 3.: Abdeckung
- 4.: Bedienelement / Drehknauf
- 5.: Drehachse
- 6.: Schaltstellung / P
- 7.: Schaltstellung / R
- 8.: Schaltstellung / N
- 9.: Schaltstellung / D
- 10.: Getriebe
- 11.: Kraftfahrzeug
- 12.: Anzeigeelement / P
- 13.: Anzeigeelement / R
- 14.: Anzeigeelement / N
- 15.: Anzeigeelement / D
- 16.: Kreisbogen
- 17.: Gerade für Schaltstellung / P
- 18.: Gerade für Schaltstellung / R
- 19.: Gerade für Schaltstellung / N
- 20.: Gerade für Schaltstellung / D
- 21.: Welle / Rotor
- 22.: Elektromotor / Antrieb
- 23.: Stator
- 24.: Lager
- 25.: Tastschalter
- 26.: Tastschalter
- 27.: Getriebesteuergerät
- 28.: erstes Ende der Welle
- 29.: zweites Ende der Welle
- 30.: Permanentmagnet
- 31.: magnetfeldempfindlicher Sensor
- 32.: Drehwinkelerfassungseinrichtung
- 33.: Hall-Effekt-Element
- 34.: Hall-Effekt-Element
- 35.: ferromagnetische Scheibe
- 36.: Substrat
- 37.: Sensorgehäuse
- 38.: Steuereinrichtung
- 39.: Motorschnittstelle
- 40.: Speicher
- 41.: Nullstelle / N
- 42.: Nullstelle / R
- 43.: Nullstelle / P
- 44.: Nullstelle zwischen N und R
- 45.: Nullstelle zwischen R und P
- 46.: Schaltstellungsbereich / R
- 47.: Schaltstellungsbereich / P
- 48.: Schaltstellungsbereich / N
- 49.: Hysterese
- 50.: Hysterese
- 51.: Regler
- 52.: Mikrokontroller
- 53.: Störgröße
- 54.: Soll-Schaltstellung
- 55.: Sollgröße
- 56.: Istgröße / Messgröße
- 57,: erste Elemente
- 58.: zweite Elemente
- 59.: Elektromagnet

- 60.: Elektromagnet
- 61.: Elektromagnet
- 62.: Elektromagnet
- 63.: Antriebswelle / Rotor
- 64.: Getriebe
- 65.: erstes Stirnrad
- 66.: zweites Stirnrad
- 67.: Magnethalterung
- 68.: Schnittstelle
- 69.: Parkbremse
- 70.: Leiterplatte
- 71.: magnetfeldempfindlicher Sensor

## Patentansprüche

1. Wähleinrichtung zum Schalten eines Fahrzeuggetriebes, mit einem um eine Drehachse (5) in unterschiedliche Schaltstellungen (6, 7, 8, 9) drehbaren Bedienelement (4), einer mit dem Bedienelement (4) verbundenen und um die Drehachse (5) drehbaren Welle (21), einer mit der Welle (21) verbundenen Drehwinkelerfassungseinrichtung (32), mittels welcher eine Verdrehung des Bedienelements (4) um die Drehachse (5) erfassbar ist, einem Aktuator (22), mittels welchem ein Drehmoment an die Welle (21) abgebbar oder einer Drehung der Welle (21) ein Drehmoment entgegensetzbar ist, und einer mit der Drehwinkelerfassungseinrichtung (32) und dem Aktuator (22) verbundenen Steuereinrichtung (38), mittels welcher das von dem Aktuator (22) abgebbare oder entgegensetzbare Drehmoment steuerbar und das Fahrzeuggetriebe (10) in den Schaltstellungen (6, 7, 8, 9) zugeordnete Schaltzustände (P, R, N, D) schaltbar ist, wobei
- die Welle (21) sich zwischen der Drehwinkelerfassungseinrichtung (32) und dem Bedienelement (4) entlang der Drehachse (5) erstreckt, welches als Drehknopf oder Drehknauf ausgebildet an einem ersten Ende (28) der.Welle (21) angeordnet ist, **dadurch gekennzeichnet, dass**
- die Drehwinkelerfassungseinrichtung (32) an einem zweiten Ende (29) der Welle(21) angeordnet ist,
die Drehwinkelerfassungseinrichtung (32) wenigstens einen magnetfeldempfindlichen Sensor (31) und wenigstens einen relativ zu diesem drehbaren Magneten (30) umfasst,
- der Aktuator (22) zwischen der Drehwinkelerfassungseinrichtung (32) und dem Bedienelement (4) auf der Welle (21) sitzt und
- dass der Magnet (30) an dem zweiten Ende (29) der Welle (21) befestigt ist, die Magnetisierung des Magneten (30) senkrecht zur Drehachse (5) ausgerichtet ist und der magnetfeldempfindliche Sensor (31) gegenüber dem Magneten (30) entlang der Drehachse (5) versetzt angeordnet ist.

2. Wähleinrichtung nach Anspruch 1, **dadurch gekennzeichnet, dass** von der Drehwinkelerfassungseinrichtung (32) der absolute Verdrehwinkel (α) des Bedienelements (4) um die Drehachse (5) erfassbar ist.

3. Wähleinrichtung nach Anspruch 1 oder 2, **dadurch gekennzeichnet,**
**dass** der magnetfeldempfindliche Sensor (31) wenigstens zwei Hall-Effekt-Elemente (33, 34) aufweist, die von einer ferroniagnetischen Scheibe (35) teilweise abgedeckt sind.

4. Wähleinrichtung nach einem der vorangehenden Ansprüche, **dadurch gekennzeichnet, dass** der Aktuator (22) von der Steuereinrichtung (38) derart steuerbar ist, dass das mittels des Aktuators (22) an die Welle (21) abgebbare oder einer Drehung der Welle (21) entgegensetzbare Drehmoment in Abhängigkeit von der erfassten Verdrehung des Bedienelements (4) variierbar ist.

5. Wähleinrichtung nach einem der vorangehenden Ansprüche, **dadurch gekennzeichnet, dass** der Aktuator (22) von der Steuereinrichtung (38) derart steuerbar ist, dass in den Schaltstellungen (6, 7, 8, 9) kein Drehmoment an die Welle (21) abgegeben oder einer Drehung der Welle (21) entgegengesetzt wird, wohingegen außerhalb der Schaltstellungen (6, 7, 8, 9) ein Drehmoment an die Welle (21) abgegeben oder einer Drehung der Welle (21) entgegengesetzt wird.

6. Wähleinrichtung nach Anspruch 4 oder 5, **dadurch gekennzeichnet,**
**dass** die Steuereinrichtung (38) einen Speicher (49) aufweist, in dem eine Drehmoment-Drehwinkel-Kennlinie hinterlegt ist, gemäß welcher das von dem Aktuator (22) an die Welle (21) abgebbare oder einer Drehung der Welle (21) entgegensetzbare Drehmoment in Abhängigkeit von der erfassten Verdrehung bestimmbar ist, wobei der Verlauf der Kennlinie Hysteresen aufweist.

7. Wähleinrichtung nach einem der vorangehenden Ansprüche, **dadurch**
**gekennzeichnet, dass** von der Steuereinrichtung (38)
- ein pulsweitenmoduliertes Signal und ein periodisches Signal erzeugbar sind,
- das pulsweitenmodulierte Signal mit dem periodischen Signal modulierbar ist und
- das mit dem periodischen Signal modulierte pulsweitenmodulierte Signal dem Aktuator (22) zuführbar ist.

8. Verwendung einer Wähleinrichtung nach einem der vorangehenden Ansprüche zum Schalten eines Fahrzeuggetriebes (10).

9. Verwendung nach Anspruch 8, **dadurch gekennzeichnet,**
**dass** die Steuereinrichtung (38) den Aktuator (22) derart ansteuert, dass beim Drehen des Bedienelements (4) eine Rastierung nachempfunden wird.

10. Verwendung nach Anspruch 8 oder 9, **dadurch gekennzeichnet,**
**dass** die Steuereinrichtung (38) den Aktuator (22) derart ansteuert, dass beim Drehen des Bedienelements (4) ein Tastschalter (M) nachempfunden wird.

11. Verwendung nach einem der Ansprüche 8 bis 10, **dadurch gekennzeichnet,**
**dass** die Steuereinrichtung (38) eine Parkbremse (69) des Fahrzeugs (11) in einer bestimmten der Schaltstellungen (6) verriegelt.

## Claims

1. Selector device for shifting a vehicle transmission, comprising an operating element (4) that can be rotated, about a rotational axis (5), into differing shift positions (6, 7, 8, 9), a shaft (21) that is connected to the operating element (4) and is rotatable about the rotational axis (5), a rotational-angle sensing device (32) that is connected to the shaft (21) and by means of which a rotation of the operating element (4) about the rotational axis (5) can be sensed, an actuator (22), by means of which a turning moment can be delivered to the shaft (21) or a turning moment can be made to oppose a rotation of the shaft (21), and a control device (38), which is connected to the rotational-angle sensing device (32) and to the actuator (22) and by means of which the turning moment that can be delivered or made to oppose by the actuator (22) is controllable and the vehicle transmission (10) can be shifted into shift states (P, R, N, D) assigned to the shift positions (6, 7, 8, 9),
- the shaft (21) extending, along the rotational axis (5), between the rotational-angle sensing device (32) and the operating element (4) that is arranged, realized as a rotary button or rotary knob, at a first end (28) of the shaft (21),
**characterized in that**
- the rotational-angle sensing device (32) is arranged at a second end (29) of the shaft (21),
- the rotational-angle sensing device (32) comprises at least one magnetic-field-sensitive sensor (31) and at least one magnet (30) that is rotatable relative to the latter,
- the actuator (22) sits between the rotational-angle sensing device (32) and the operating element (4), on the shaft (21), and
- the magnet (30) is attached to the second end (29) of the shaft (21), the magnetization of the magnet (30) is aligned perpendicularly relative to the rotational axis (5), and the magnetic-field-sensitive sensor (31) is arranged opposite the magnet (30), further along the rotational axis (5).

2. Selector device according to Claim 1, **characterized in that** the absolute rotational angle (α) of the operating element (4) about the rotational axis (5) can be sensed by the rotational-angle sensing device (32).

3. Selector device according to Claim 1 or 2, **characterized in that** the magnetic-field-sensitive sensor (31) has at least two Hall-effect elements (33, 34), which are partially covered by a ferromagnetic disc (35).

4. Selector device according to any one of the preceding claims, **characterized in that** the actuator (22) can be controlled by the control device (38) in such a way that the turning moment that, by means of the actuator (22), can be delivered to the shaft (21) or made to oppose a rotation of the shaft (21) can be varied in dependence of the sensed rotation of the operating element (4).

5. Selector device according to any one of the preceding claims, **characterized in that** the actuator (22) can be controlled by the control device (38) in such a way that, in the shift positions (6, 7, 8, 9), no turning moment is delivered to the shaft (21) or made to oppose a rotation of the shaft (21), whereas, outside of the shift positions (6, 7, 8, 9), a turning moment is delivered to the shaft (21) or made to oppose a rotation of the shaft (21).

6. Selector device according to Claim 4 or 5, **characterized in that** the control device (38) has a memory (49), in which there is stored a turning-moment/rotational-angle characteristic according to which the turning moment that can be delivered by the actuator (22) to the shaft (21) or that can be made by the actuator to oppose a rotation of the shaft (21) can be determined in dependence on the sensed rotation, the course of the characteristic having hystereses.

7. Selector device according to any one of the preceding claims, **characterized in that**, through the control device (38)
- a pulse-width-modulated signal and a periodic signal can be generated,
- the pulse-width-modulated signal can be modulated with the periodic signal, and
- the pulse-width-modulated signal modulated with the periodic signal can be supplied to the actuator (22).

8. Use of a selector device according to any one of the preceding claims for the purpose of shifting a vehicle transmission (10).

9. Use according to Claim 8, **characterized in that** the control device (38) operates the actuator (22) in such a way that, upon the operating element (4) being rotated, an indexing system is emulated.

10. Use according to Claim 8 or 9, **characterized in that** the control device (38) operates the actuator (22) in such a way that, upon the operating element (4) being rotated, a pushbutton switch (M) is emulated.

11. Use according to any one of Claims 8 to 10, **characterized in that** the control device (38) locks a parking brake (69) of the vehicle (11) in a particular position of the shift positions (6).

## Revendications

1. Dispositif de sélection pour commuter une transmission de véhicule, comprenant un élément de réglage (4) susceptible de tourner autour d'un axe de rotation (5) dans différentes positions de commutation (6, 7, 8, 9), un arbre (21) raccordé à l'élément de réglage (4) et pouvant tourner autour de l'axe de rotation (5), un dispositif de détection d'angle de rotation (32) raccordé à l'arbre (21) et au moyen duquel il peut être détecté une rotation de l'élément de réglage (4) autour de l'axe de rotation (5), un actionneur (22), au moyen duquel un couple peut être délivré à l'arbre (21) ou un couple peut être opposé à une rotation de l'arbre (21), et un dispositif de commande (38) raccordé au dispositif de détection d'angle de rotation (32) et à l'actionneur (22), et au moyen duquel le couple délivrable ou opposable par l'actionneur (22) peut être commandé et la transmission de véhicule (10) peut être commutée dans des états de commutation (P, R, N, D) affectés aux positions de commutation (6, 7, 8, 9), dans lequel
- l'arbre (21) s'étend le long de l'axe de rotation (5) entre le dispositif de détection d'angle de rotation (32) et l'élément de réglage (4), qui est aménagé en forme de bouton tournant à une première extrémité (28) de l'arbre (21), **caractérisé en ce que**
- le dispositif de détection d'angle de rotation (32) est aménagé à une seconde extrémité (29) de l'arbre (21), lequel dispositif de détection d'angle de rotation (32) comprend au moins un capteur (31) sensible aux champs magnétiques et au moins un aimant (30) pouvant tourner par rapport à celui-ci,
- l'actionneur (22) est logé sur l'arbre (21) entre le dispositif de détection d'angle de rotation (32) et l'élément de réglage (4), et
- **en ce que** l'aimant (30) est fixé sur la seconde extrémité (29) de l'arbre (21), la magnétisation de l'aimant (30) est orientée perpendiculairement à l'axe de rotation (5) et le capteur (31) sensible aux champs magnétiques est disposé en décalage par rapport à l'aimant (30) le long de l'axe de rotation (5).

2. Dispositif de sélection selon la revendication 1, **caractérisé en ce que** l'angle de rotation absolu (α) de l'élément de réglage (4) autour de l'axe de rotation (5) peut être détecté par le dispositif de détection d'angle de rotation (32).

3. Dispositif de sélection selon la revendication 1 ou 2, **caractérisé en ce que** le capteur (31) sensible aux champs magnétiques présente au moins deux éléments à effet Hall (33, 34), qui sont recouverts en partie par un disque ferromagnétique (35).

4. Dispositif de sélection selon l'une quelconque des revendications précédentes, **caractérisé en ce que** l'actionneur (22) peut être commandé par le dispositif de commande (38) de sorte que le couple qui peut être délivré au moyen de l'actionneur (22) à l'arbre (21) ou peut être opposé à une rotation de l'arbre (21) peut varier en fonction de la rotation détectée de l'élément de réglage (4).

5. Dispositif de sélection selon l'une quelconque des revendications précédentes, **caractérisé en ce que** l'actionneur (22) peut être commandé par le dispositif de commande (38) de sorte que, dans les positions de commutation (6, 7, 8, 9), aucun couple ne soit délivré à l'arbre (21) ou ne soit opposé à une rotation de l'arbre (21), tandis qu'en dehors des positions de commutation (6, 7, 8, 9), un couple est délivré à l'arbre (21) ou opposé à une rotation de l'arbre (21).

6. Dispositif de sélection selon la revendication 4 ou 5, **caractérisé en ce que** le dispositif de commande (38) présente une mémoire (49), dans laquelle est mémorisée une caractéristique de couple angle de rotation, selon laquelle le couple qui peut être délivré par l'actionneur (22) à l'arbre (21) ou être opposé à une rotation de l'arbre (21) peut être déterminé en fonction de la rotation détectée, le tracé de la caractéristique présentant des hystérésis.

7. Dispositif de sélection selon l'une quelconque des revendications précédentes, **caractérisé en ce que** le dispositif de commande (38) permet :
- de générer un signal modulé en largeur d'impulsion et un signal périodique,
- de moduler le signal modulé en largeur d'impulsion avec le signal périodique, et
- d'acheminer le signal modulé en largeur d'impulsion modulé avec le signal périodique à l'actionneur (22).

8. Utilisation d'un dispositif de sélection selon l'une quelconque des revendications précédentes pour la commutation d'une transmission de véhicule (10).

9. Utilisation selon la revendication 8, **caractérisée en ce que** le dispositif de commande (38) commande l'actionneur (22) de manière à simuler un encliquetage lors de la rotation de l'élément de réglage (4).

10. Utilisation selon la revendication 8 ou 9, **caractérisée en ce que** le dispositif de commande (38) commande l'actionneur (22) de manière à simuler un bouton-poussoir (M) lors de la rotation de l'élément de réglage (4).

11. Utilisation selon l'une quelconque des revendications 8 à 10, **caractérisée en ce que** le dispositif de commande (38) verrouille un frein de stationnement (69) du véhicule (11) dans une certaine des positions de commutation (6).
